# EUROPEAN PATENT APPLICATION

(11) **EP 2 094 012 A1**
(43) Date of publication of application: **26.08.2009**
(21) Application number: 09002454.8
(22) Date of filing: 20.02.2009
(51) Int. Cl.: H04N 7/24

(54) **Reception verification/non-reception verification of base/enhancement video layers**

(30) Priority: 25.02.2008 US 36937
(71) Applicant: Broadcom Corporation, Irvine CA 92617 (US)
(72) Inventor: Quigley, Thomas J., Franklin, NC 28734 (US); Chen, Sherman (Xuemin), Irvine, CA 92617 (US); Rosmann, David, Irvine, CA 92603 (US); Karaoguz, Jeyhan, Irvine, CA 92606 (US); Dove, Michael, Los Gatos, CA 95032 (US); Gordon, Stephen, Lexington, MA 02421 (US)
(74) Representative: Jehle, Volker Armin

(57) **Abstract**

Operating a source device to transport video data to a destination device. The source device and destination device establish both a reception verified communication link and a non-reception verified communication link. The source device encodes the video data into a plurality of video layer streams including a base video layer stream and at least one other video layer stream. The source device transmits he base video layer stream to the destination device via the reception verified communication link. The source device transmits the at least one other video layer stream to the destination device via the non-reception verified communication link. The source device may also encode audio data and transmit the encoded audio data to the destination device. The destination device receives and decodes the audio/video streams and may present audio data produced thereby to a user.

## Description

### BACKGROUND

### 1. Technical Field of the Invention

This invention relates generally to video/audio content transport, and more particularly to the preparation, transportation, and receipt of such video/audio content.

### 2. Related Art

The broadcast of digitized video/audio information (multimedia content) is well known. Limited access communication networks such as cable television systems, satellite television systems, and direct broadcast television systems support delivery of digitized multimedia content via controlled transport medium. In the case of a cable modem system, a dedicated network that includes cable modem plant is carefully controlled by the cable system provider to ensure that the multimedia content is robustly delivered to subscribers' receivers. Likewise, with satellite television systems, dedicated wireless spectrum robustly carries the multi-media content to subscribers' receivers. Further, in direct broadcast television systems such as High Definition (HD) broadcast systems, dedicated wireless spectrum robustly delivers the multi-media content from a transmitting tower to receiving devices. Robust delivery, resulting in timely receipt of the multimedia content by a receiving device is critical for the quality of delivered video and audio.

Some of these limited access communication networks now support on-demand programming in which multimedia content is directed to one, or a relatively few number of receiving devices. The number of on-demand programs that can be serviced by each of these types of systems depends upon, among other things, the availability of data throughput between a multimedia source device and the one or more receiving devices. Generally, this on-demand programming is initiated by one or more subscribers and serviced only upon initiation.

Publicly accessible communication networks, e.g., Local Area Networks (LANs), Wireless Local Area Networks (WLANs), Wide Area Networks (WANs), Wireless Wide Area Networks (WWANs), and cellular telephone networks, have evolved to the point where they now are capable of providing data rates sufficient to service streamed multimedia content. The format of the streamed multimedia content is similar/same as that that is serviced by the limited access networks, e.g., cable networks, satellite networks. However, each of these communication networks is shared by many users that compete for available data throughput. Resultantly, streamed multimedia content is typically not given preferential treatment by these networks.

Generally, streamed multimedia content is formed/created by a first electronic device, e.g., web server, personal computer, user equipment, etc., transmitted across one or more communication networks, and received and processed by a second electronic device, e.g., personal computer, laptop computer, cellular telephone, WLAN device, or WWAN device. In creating the multimedia content, the first electronic device obtains/retrieves multimedia content from a video camera or from a storage device, for example, and encodes the multimedia content to create encoded audio and video frames according to a standard format, e.g., Quicktime, (motion picture expert group) MPEG-2, MPEG-4, or H.264, for example. The encoded audio and video frames are placed into data packets that are sequentially transmitted from the first electronic device onto a servicing communication network, the data packets addressed to one or more second electronic device(s). The sequentially transmitted sequence of encoded audio/video frames may be referred to as an audio/video stream. One or more communication networks carry the data packets to the second electronic device. The second electronic device receives the data packets, reorders the data packets if required, and extracts the encoded audio and video frames from the data packets. A decoder of the second electronic device decodes the encoded audio and/or video frames to produce audio and video data. The second electronic device then stores the video/audio data and/or presents the video/audio data to a user via a user interface.

The audio/video stream typically traverses a number of differing types of communication networks, e.g., LANs, WANs, the Internet, WWANs, WLANs, one or more cellular networks, etc. Some of these networks may not support the audio/video stream reliability and/or with sufficient data rate, resulting in poor quality audio/video at the second electronic device. Thus, a need exists for a structures and operations for the formation, transmission, and receipt of audio/video streams across such networks. Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

The present invention is directed to apparatus and methods of operation that are further described in the following Brief Description of the Drawings, the Detailed Description of the Drawings, and the claims.

According to an aspect, a method for operating a source device to transport video data to a destination device is provided, the method comprising:
establishing a reception verified communication link with the destination device;
establishing a non-reception verified communication link with the destination device;
coding the video data into a plurality of video layer streams including a base video layer stream and at least one other video layer stream;
transmitting the base video layer stream to the destination device via the reception verified communication link; and
transmitting the at least one other video layer stream to the destination device via the non-reception verified communication link.

Advantageously, the reception verified communication link comprises at least one of the Transmission Control Protocol (TCP), the Stream Transmission Control Protocol (STCP), and the Streamed Video File Transfer Protocol (SVFTP).

Advantageously, the non-reception verified communication link comprises the User Datagram Protocol.

Advantageously, the reception verified communication link and the non-reception verified communication link differ at the transport layer of corresponding protocol stacks.

Advantageously:
the base video layer stream is an independent video stream; and
the at least one other video layer stream is dependent upon the independent video stream.

Advantageously, the method further comprises:
encoding audio data into an encoded audio stream; and
transmitting the encoded audio stream to the destination device using the non-reception verified communication link.

Advantageously, the method further comprises:
encoding audio data into an encoded audio stream; and
transmitting the encoded audio stream to the destination device using the reception verified communication link.

According to an aspect, a method for operating a destination device to receive video data from a source device comprises:
establishing a reception verified communication link with the source device;
establishing a non-reception verified communication link with the source device;
receiving a base video layer stream from the source device via the reception verified communication link;
receiving at least one other video layer stream from the source device via the non-reception verified communication link; and
decoding the base video layer stream and at least one other video layer stream to produce output video data.

Advantageously, the reception verified communication link comprises at least one of the Transmission Control Protocol (TCP), the Stream Transmission Control Protocol (STCP), and the Streamed Video File Transfer Protocol (SVFTP).

Advantageously, the non-reception verified communication link comprises the User Datagram Protocol.

Advantageously, the reception verified communication link and the non-reception verified communication link differ at the transport layer of corresponding protocol stacks.

Advantageously:
the base video layer stream is an independent video stream; and
the at least one other video layer stream is dependent upon the independent video stream.

Advantageously, the method further comprises receiving an encoded audio stream using the non-reception verified communication link.

Advantageously, the method further comprises receiving an encoded audio stream using the reception verified communication link.

According to an aspect, an electronic device for transporting video data to a destination device comprises:
a communication interface; and
processing circuitry coupled to the communication interface, the processing circuitry operable to:
   establish a reception verified communication link with the destination device via the communication interface;
   establish a non-reception verified communication link with the destination device via the communication interface;
   code the video data into a plurality of video layer streams including a base video layer stream and at least one other video layer stream;
   transmit the base video layer stream to the destination device via the reception verified communication link; and
   transmit the at least one other video layer stream to the destination device via the non-reception verified communication link.

Advantageously, the reception verified communication link comprises at least one of the Transmission Control Protocol (TCP), the Stream Transmission Control Protocol (STCP), and the Streamed Video File Transfer Protocol (SVFTP).

Advantageously, the non-reception verified communication link comprises the User Datagram Protocol.

Advantageously, the reception verified communication link and the non-reception verified communication link differ at the transport layer of corresponding protocol stacks.

Advantageously:
the base video layer stream is an independent video stream; and
the at least one other video layer stream is dependent upon the independent video stream.

Advantageously, the device further comprises:
encoding audio data into an encoded audio stream; and
transmitting the encoded audio stream to the destination device.

According to an aspect, an electronic device for receiving a plurality of video data streams from a source device comprises:
a communication interface; and
processing circuitry coupled to the communication interface, the processing circuitry operable to:
   establish a reception verified communication link with the source device via the communication interface;
   establish a non-reception verified communication link with the source device via the communication interface;
   receive a base video layer stream from the source device via the reception verified communication link;
   receive at least one other video layer stream from the source device via the non-reception verified communication link; and
   decode the base video layer stream and at least one other video layer stream to produce output video data.

Advantageously, the reception verified communication link comprises at least one of the Transmission Control Protocol (TCP), the Stream Transmission Control Protocol (STCP), and the Streamed Video File Transfer Protocol (SVFTP).

Advantageously, the non-reception verified communication link comprises the User Datagram Protocol.

Advantageously:
the base video layer stream is an independent video stream; and
the at least one other video layer stream is dependent upon the independent video stream.

Advantageously, the method further comprises:
receiving an encoded audio stream from the source device; and
decoding the encoded audio stream to produce audio data.
Other features and advantages of the present invention will become apparent from the following detailed description of the invention made with reference to the accompanying drawings.

### BRIEF DESCRIPTION OF THE DRAWINGS

FIG. 1 is system diagram illustrating an audio/video system operating according to one or more embodiments of the present invention;
FIG. 2 is system diagram illustrating another audio/video system operating according to one or more embodiments of the present invention;
FIG. 3 is a system diagram illustrating a number of communication networks and a number of electronic devices that support audio/video delivery according to one or more embodiments of the present invention;
FIG. 4 is a block diagram illustrating protocol layers supported by a source device and a destination device according to one or more embodiments of the present invention;
FIG. 5 is a diagram illustrating various video images produced according to embodiments of the present invention;
FIG. 6 is a block diagram of an electronic device constructed and/or operating according to one or more embodiments of the present invention;
FIG. 7 is a block diagram illustrating another electronic device constructed and/or operating according to one or more embodiments of the present invention;
FIG. 8 is a flow chart illustrating operations according to one or more embodiments of the present invention for transmitting video layer streams over multiple communication links; and
FIG. 9 is a flow chart illustrating operations according to one or more embodiments of the present invention for receiving video layer streams over multiple communication links.

### DETAILED DESCRIPTION OF THE DRAWINGS

Generally, according to aspects to the present invention, encoded video frames and/or encoded audio data is/are streamed from a source device to a destination device. The source device uses at least two communication links to stream the encoded video frames/encoded audio data to the destination device. With respect to video data, the source device encodes the video data to produce a plurality of video layer streams that include a base video layer stream and at least one other video layer stream. The source device establishes a reception verified communication link with the destination device and at least one non-reception verified communication link with the destination device. The source device then transmits the base video layer stream to the destination device via the reception verified communication link. Further, the source device transmits the at least one other video layer stream to the destination device via the at least one other non-reception verified communication link. Using this methodology, the base video layer stream that is transmitted via the reception verified communication link is more robustly delivered to the destination device as compared to the other video layer streams. The other video layer streams, in some embodiments being of less importance than the base video layer stream, are transmitted via the non-reception verified communication link to the destination device. If the at least one other video layer stream does not arrive correctly at the destination device, the missing information is simply not used in decoding the combination of the base video layer stream and the at least one other video layer stream by the destination device. Further, communication network resources are used efficiently because only the base video layer stream is transmitted using the reception verified communication link.

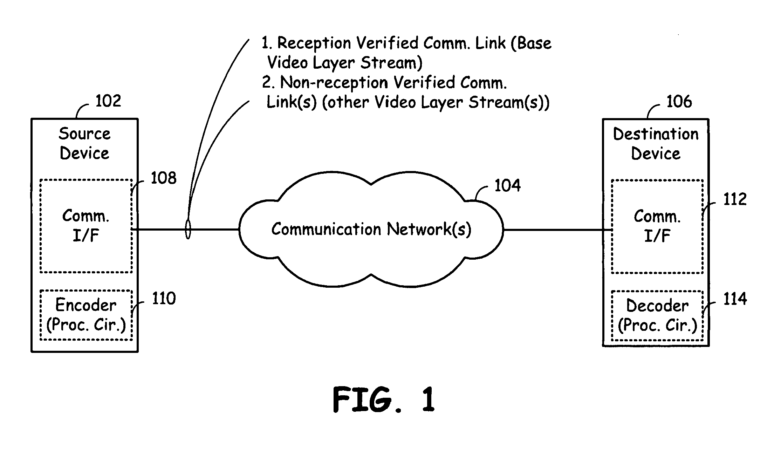

FIG. 1 is system diagram illustrating an audio/video system operating according to one or more embodiments of the present invention. A source device 102 couples to a destination device 106 via one or more communication network(s) 104. The source device 102 includes at least a communication interface 108 and an encoder 110. The encoder 110 may be enabled via dedicated hardware resources, software resources executed by processing circuitry, or a combination of dedicated of dedicated hardware and software enabled processing circuitry. The destination device 106 includes at least a communication interface 112 and a decoder 114. The decoder 114 may be enabled as dedicated hardware resources, software enabled processing circuitry, or a combination of dedicated hardware and software enabled processing circuitry. Each communication interface 108 and 112 may include wired and/or wireless interfaces. The particular types of the communication interfaces 108 and 112 used with the present invention with various embodiments is dependent upon the particular applications made thereof.

Communication network(s) 104 coupling the source device 102 to the destination device 106 include one or more networks, which may be of differing types. For example, communication network(s) 104 may include one or more Personal Area Networks (PANs), one or more Local Area Networks (LANs), one or more Wide Area Networks (WANs), the Internet, the World Wide Web, and/or or one or more wireless networks. Wired portions of the communication network(s) 104 include cable network(s), Ethernet network(s), optical network(s), and/or other types of networks that use hard media. The wireless networks of the communication network(s) 104 may include cellular networks, Wireless Local Area Networks (WLANs), Wireless Wide Area Networks (WWANs), Wireless Personal Area Networks (WPANs), and/or other types of wireless networks. Some of the networks making up communication network(s) 104 may be robust in the delivery of audio/video streams from the source device 102 to the destination device 106. However, other portions of the communication network(s) 104 may be unreliable, resource limited, or otherwise not able to robustly deliver audio/video packets in a consistent manner. For example, wireless networks are typically shared by a number of different users, each competing for the available resources of the wireless network and which may be subject to noise and other environmental conditions that limit their ability to transmit data at a rate required by streamed audio/video data applications.

According to certain aspects of the present invention, the electronic source device 102 is operable via its communication interface 108 and processing circuitry 110 to establish a reception verified communication link with the destination device 106 (via the destination device's communication interface 112 and the communication network(s) 104). Further, the source device 102 is operable to establish a non-reception verified communication link with the destination device 106 via its communication interface 108 and communication network 104 (also via the destination device's communication interface 112). In some embodiments, the reception verified communication link is established using Transmission Control Protocol (TCP) layer operations. Further, in other embodiments, the non-reception verified communication link is established using User Datagram Protocol (UDP) operations. The source device 102 is further operable to encode video data stored therein or retrieved from another source into a plurality of video layer streams. The video layer streams include a base video layer stream and at least one other video layer stream. The source device 102 is operable to transmit the base video layer stream to the destination device 106 via the reception verified communication link. Further, the source device 102 is operable to transmit the at least one other video layer stream to the destination device 106 via the non-reception verified communication link. Using these teachings of the present invention, the base video layer stream is transmitted to the destination device 106 from the source device 102 in a robust manner. Further, the at least one other video layer stream is transmitted from the source device 102 to the destination device 106 in a less robust manner but using fewer communication resources because of the non-reception verified characteristics of the transmission of the other video layer streams.

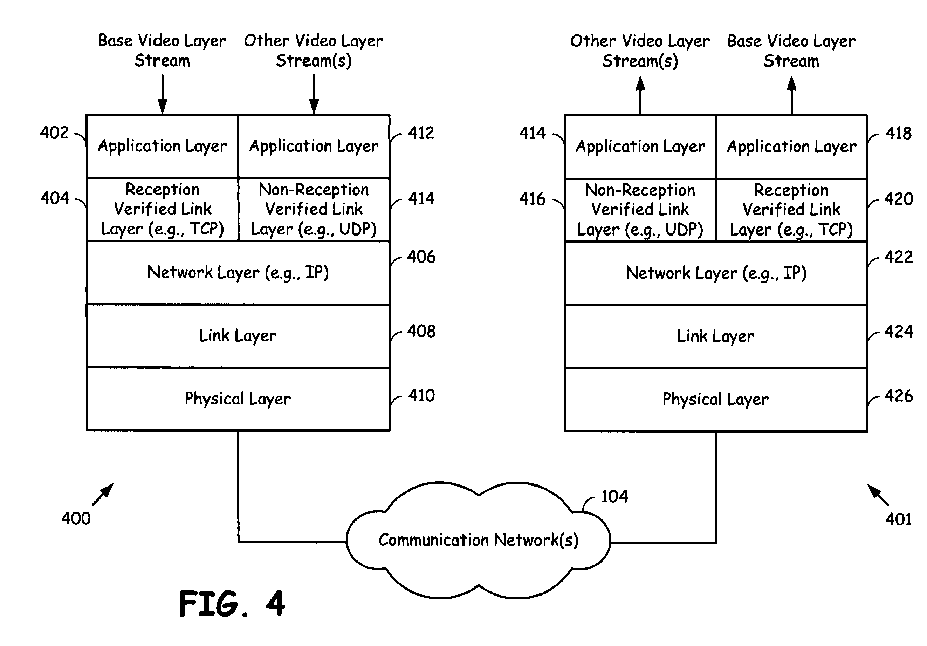

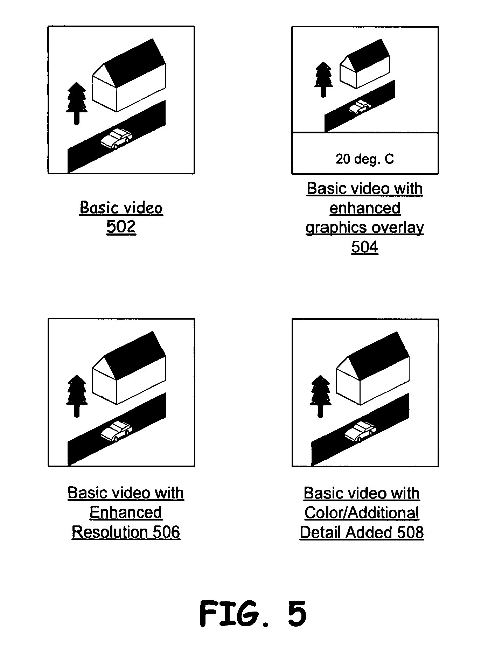

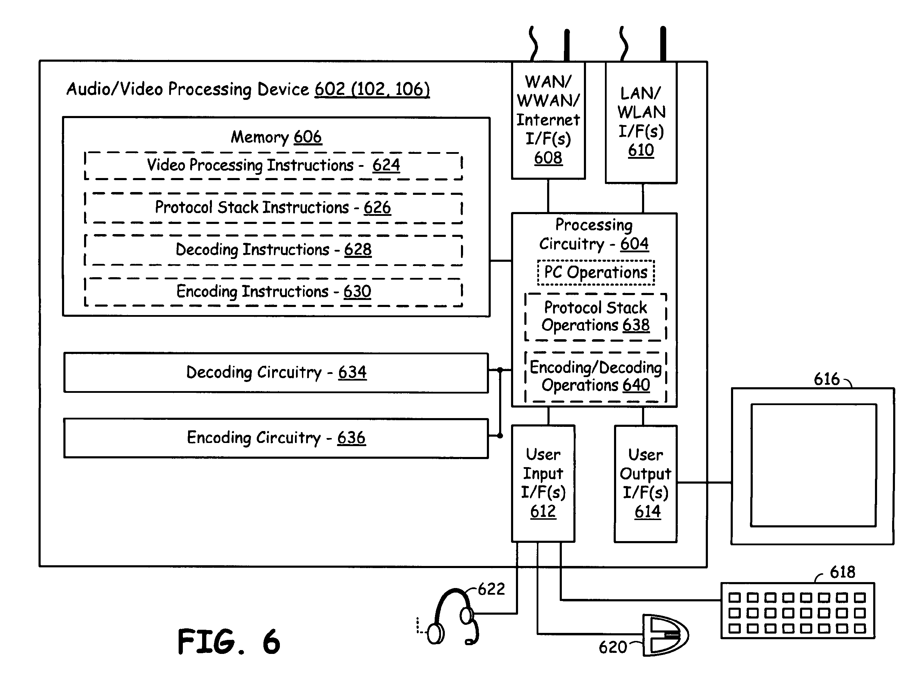

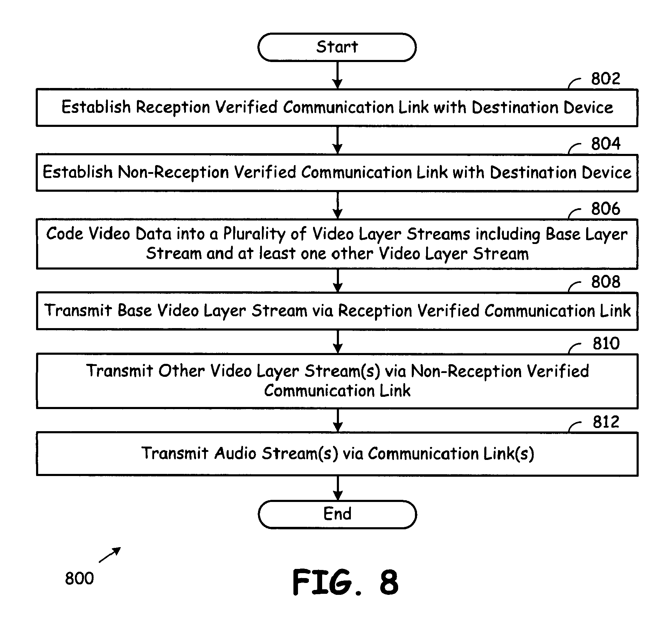

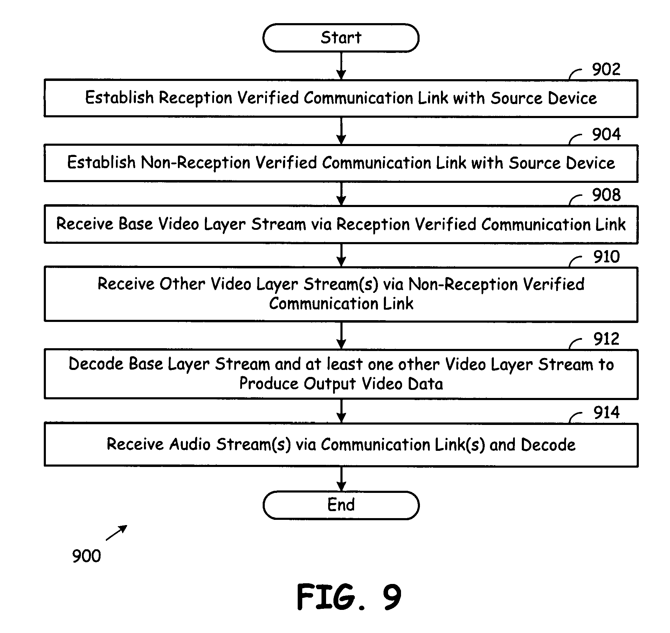

Aspects of the operation of FIG. 1 relating to protocol layer operations will be described further with reference to FIG. 4. Examples of the segregation of video data transferred from the source device 102 to the destination device 106 in the various protocol layers will be described further with reference to FIG. 5. Particular structures of the source device 102 and the destination device 106 will be described further with reference to FIG. 6. Operations of source device 102 will be described with reference to FIG. 8. Operations of destination 106 will be described with reference to FIG. 9.

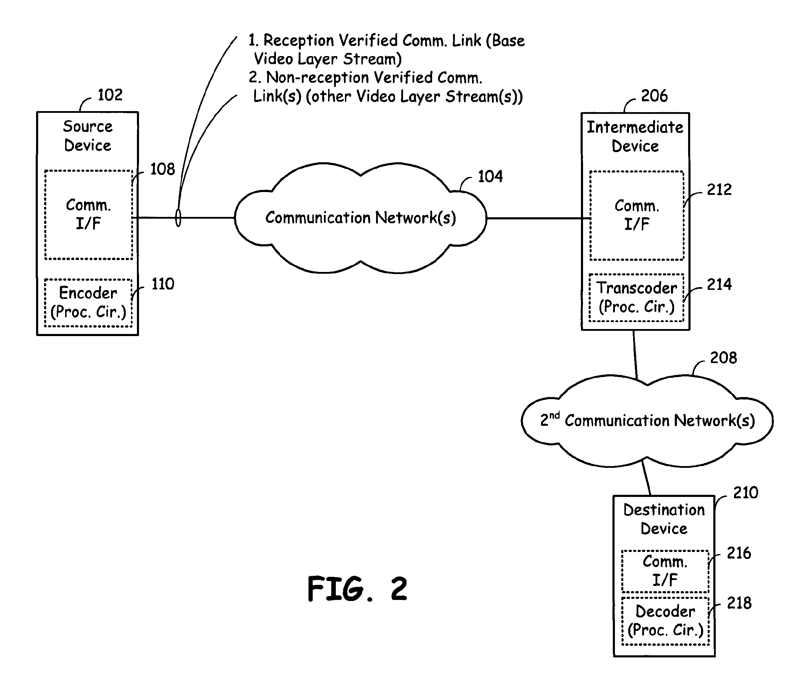

FIG. 2 is system diagram illustrating another audio/video system operating according to one or more embodiments of the present invention. With the embodiment of FIG. 2, source device 102 supports operations consistent with source device 102 of FIG. 1. As contrasted to the structure/operation of FIG. 1, source device 102 establishes both reception verified and non-reception verified communication links with an intermediate device 206 instead of a destination device 210. Both the reception verified communication link and the non-reception verified communication link are established across communication network(s) 104. Source device 102 encodes video data into a plurality of video layer streams including a base video layer stream and at least one other video layer stream. The source device 102 then transmits the base video layer stream to the intermediate device 206 via the reception verified communication link. Further, the source device 102 transmits the at least one other video layer stream to the intermediate device 206 via the non-reception verified communication link.

Intermediate device 206, however, is not the ultimate destination of the streamed video transmitted by source device 102. The base video layer stream and the at least one other video layer stream are received via communication interface 212 of the intermediate device 206 that services the reception verified communication link and the non-reception verified communication link. With the embodiment of FIG. 2, the intermediate device 206 transcodes the received base video layer stream and the at least one other video layer stream using a transcoder 214. In performing the transcoding operations, transcoder 214 receives the base video layer stream and at least one other video layer stream and transcodes the layered video into a single video layer stream for transmission across 2nd communication network(s) 208 to destination device 210 using the communication interface 212. In one particular operation of the system of FIG. 2, the 2nd communication network(s) 208 may be more robust than communication network(s) 104. In such case, 2nd communication network(s) 208 are robust enough that they can service a single video layer stream transmitted from intermediate device 206 to destination device 210.

Because of the reception verified communication link and the non-reception verified communication link linking source device 102 and intermediate device 206, transcoder 214 may not always receive all of the video layer streams from source device 102. Thus, the operations of transcoder 214 may vary over time based upon the streamed information that is received. In any case, transcoder 214 produces a single video stream to destination device 210 transmitted across 2nd communication network(s) 208.

Destination device 210 includes communication interface 216 and decoder 218. Communication interface 216 receives streamed video from intermediate device 206 across 2nd communication network(s) 208. Decoder 218 decodes the streamed video received to produce video data, which may be presented by a display and user interface of destination device 210. Alternately, the video data may be stored in local storage.

Referring to both FIG. 1 and FIG. 2, audio data may also be streamed from source device 102 to destination device 106 or 210. The streamed audio data may be transmitted using one or both of the non-reception verified communication link and the reception verified communication link. In some embodiments, because streamed audio data is less data intensive than streamed video, the encoded audio stream may be transmitted using the non-reception verified communication link in a substantially robust manner. However, in other cases, due to a requirement of having the streamed audio data received by destination device 106 or 210, the streamed audio data may be transmitted via the reception verified communication link.

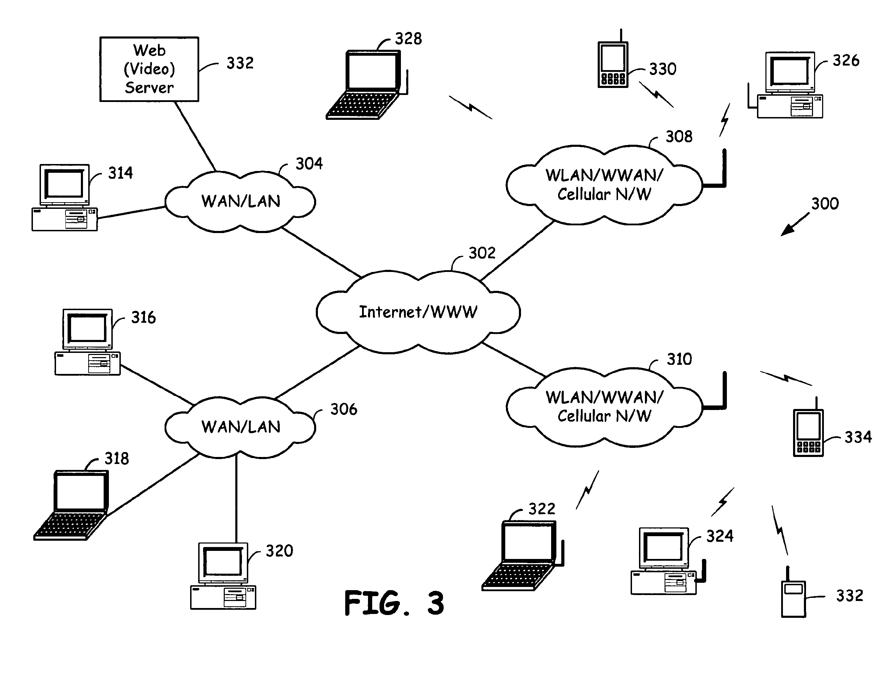

FIG. 3 is a system diagram illustrating a number of communication networks and a number of electronic devices that support audio/video delivery according to one or more embodiments of the present invention. The system 300 of FIG. 3 includes a plurality of communication networks 302, 304, 306, 308, and 310 that service a plurality of electronic devices 314, 316, 318, 320, 322, 324, 326, 328, 330, 332, and 334. These communication networks include the Internet/World Wide Web (WWW) 302, one or more Wide Area Networks/Local Area Networks (WANs/LANs) 304 and 306, and one or more Wireless Wide Area Networks/Wireless Local Area Networks/Cellular networks (WLANs/WWANs/Cellular networks) 308 and 310. The Internet/WWW 302 is generally known and supports Internet Protocol (IP) operations. The WANs/LANs 304 and 306 support electronic devices 314, 316, 318, and 320 and support IP operations. The WLANs/WWANs/Cellular networks 308 and 310 support electronic devices 322, 324, 326, 328, 330, 332, and 334 and also support IP operations.

The WLAN/WWAN/Cellular networks 308 and 310 operate according to one or more wireless interface standards, e.g., IEEE 802.11x, WiMAX, GSM, EDGE, GPRS, WCDMA, CDMA, 3xEV-DO, 3xEV-DV, etc. The WLAN/WWAN/Cellular networks 308 and 310 include a back-haul network that couples to the Internet/WWW 302 and service wireless links for wirelessly enabled electronic devices 322, 324, 326, 328, 330, 332, and 334. In providing this wireless service, the WLAN/WWAN/Cellular networks 308 and 310 include infrastructure devices, e.g., Access Points and base stations to wirelessly service the electronic devices 322, 324, 326, 328, 330, 332, and 334. The wireless links serviced by the WLAN/WWAN/Cellular networks 308 and 310 are shared amongst the wirelessly enabled electronic devices 324-134 and are generally data throughput limited. Such data throughput limitations result because the wireless links are shared, the wireless links are degraded by operating conditions, and/or simply because the wireless links have basic data throughput limitations.

According to operations of the system 300 of FIG. 3, any of the electronic devices 314, 316, 318, 320, 322, 324, 326, 328, 330, 332, or 334 may serve as a source device, an intermediate device, or a destination device as described with reference to FIGs. 1 and 2 and as will be further described with reference to FIGs. 4-9. Each of these devices 314-334 may transmit layered video streams via reception verified and non-reception verified communication links to other of these devices 314-334 via one or more of the servicing networks 302-310 according to the principles of the present invention. Other of these devices 314-334 may receive the layered video streams and operate thereupon according to the principles of the present invention.

FIG. 4 is a block diagram illustrating protocol layers supported by a source device and a destination device according to one or more embodiments of the present invention. A base video layer stream and at least one other video layer stream are transmitted from a source device 400 to the destination device 401. Generally, the source device 400 and the destination device 401 support at least partially corresponding protocol layer stacks. The protocol layer stack of source device 400 includes application layers 402 and 412, transport layers 404 and 414, network layer 406, link layer 408, and physical layer 410. The physical layer 410 supported by source device 400 is dependent upon the manner in which the source device 400 interfaces to communication network(s) 104. For example, if source device 400 connects via an Ethernet network, its physical layer 410 will be an Ethernet physical layer. Further, link layer 408 may depend upon physical layer 410 and other limitations of the communication interface of the source device 400. Network layer 406 may be an Internet Protocol (IP) layer or another network layer.

According to the present invention, the base video layer stream is transmitted from source device 400 to destination device via a reception verified communication link. In such case, the reception verified communication link includes a reception verified link layer 404. Examples of such a reception verified link layer 404 include a TCP layer, a Stream Transmission Control Protocol (STCP) layer, a Streamed Video File Transfer Protocol (SVSTP) layer, or another protocol layer that support reception verification. Application layer 402 services reception verified link layer 404. The other video layer streams are transmitted via a non-reception verified communication link from source device 400 to destination device 401. The protocol stack servicing the non-reception verified communication link includes application layer 412 and a non-reception verified link layer 414. The non-reception verified link layer 414 may be a User Datagram Protocol (UDP) layer or another link layer protocol that is not reception verified. Note that separate application layers 402 and 412 are shown. However, in some embodiments, the application layer may be a single layer that services both the reception verified link layer 404 and the non-reception verified link layer 414. In other embodiments, the Real Time Streaming Protocol (RTSP), the Real-Time Transport Protocol (RTP), the RTP Control Protocol (RTCP), the Streaming Download Project (SDP) protocol(s), the Session Initiation Protocol (SIP), and/or the Resource-Reservation Protocol (RSVP) may form a portion of the reception verified communication link and/or the non-reception verified communication link.

Destination device 401 has a protocol stack that corresponds substantially to the source device 400 protocol stack, at least at the network layer and above. In such case, the destination device 401 includes application layer 418 and reception verified link layer 420 that form a portion of the reception verified communication link that services the base video layer stream. Further, the destination device 401 includes an application layer 414 and a non-reception verified link layer 416 that form a portion of the reception verified communication link that services the at least one other video layer streams. Destination device 401 also includes a network layer 422 that may be an IP layer 422, a link layer 424, and a physical layer 426. As was the case with the source device 400, the destination device's physical layer 426 and link layer 424 are specific to the manner in which the destination device 401 couples to communication network(s) 104. For example, source device 400 may couple to the communication network(s) 104 via an Ethernet interface while destination device 401 may couple to the communication network(s) 104 via a cellular interface standard such as GPRS, EDGE, 1xEV-DO, or another wireless interface standard. In such example, the link layer 408 and physical layer 410 of the source device 400 would of course differ from the link layer 424 and physical layer 426 of the destination device 401.

FIG. 5 is a diagram illustrating various video images produced according to embodiments of the present invention. Generally, the base video layer stream carries video frames that may be decoded to produce basic video 502. Basic video 502 as shown, illustrates graphics that may be presented to a user on display of a destination device. The base video 502 layer may be of low resolution, may be black and white, may be of lower color quality, or have other characteristics that may be enhanced by the at least one other video layer. The at least one other video layer stream carries information that may be added to or used to modify basic video 502. Examples of information carried by the at least one other video layer stream include graphics overlay information, enhanced resolution information, enhanced color information, additional detail information, among other information. According to aspects of the present invention, data carried by the at least one other video stream is used by a decoder to produce combined video data.

For example, the at least one other video layer may be combined with the base video layer to produce basic video with enhanced graphics overlay 504. Further, the at least one other video layer may be combined with the base video layer to produce basic video with enhanced resolution 506 (image shown at 506 is provide for illustration only). The at least one other video layer stream may include information that enables the decoder of the destination device to produce a video image with color, with additional detail, or with other information that is received via the at least one other video stream. Shown in FIG. 5 is a basic video with color/additional detail added 508 (image shown at 508 is provide for illustration only).

Because the basic video 502 is carried by the base video layer stream and transmitted via the reception verified communication link, the basic video 502 is more robustly delivered to the destination device. While the robust delivery of the basic video 502 will typically consume additional network resources and processing resources in both the first device of the destination device, using the reception verified communication link causes the basic video 502 to be more robustly delivered. In such case, the basic video 502 is typically more often available at the destination device than the video information carried by the at least one other video layer stream. Thus, if the at least one other video layer stream carries the additional information, such additional video information may not always be available. In such case, the encoder or the decoder at the destination device will use the at least one other video stream when it is available to enhance the basic video 502 to produce video information 504, 506, or 508. However, when one or more of at least one other video layer streams is not available, the decoder at the destination device is still able to produce a basic video 502 in most operations. The example illustrated with FIG. 5 assumes that the at least one other video layer is dependent from the base video layer. In other embodiments, such dependency is not required.

FIG. 6 is a block diagram illustrating an electronic device constructed and/or operating according to one or more embodiments of the present invention. The electronic device (audio/video processing device) 602 is representative of one or more of the source device 102 of FIG. 1 and 2, the destination devices 106 and 210 of FIGs. 1 and 2, and/or the electronic devices 114 - 134 of FIG. 3. The components of audio/video processing device 602, also referred to as electronic device, are generically illustrated. Particular embodiments of the electronic device 602 of FIG. 6 may include some, most, or all of the components that are illustrated in FIG. 6.

Generally, the electronic device 602 includes processing circuitry 604, memory 606, first network interface 608, optional second network interface 610, user input interfaces 612, and user output interfaces 614. The user input interfaces 612 couple to headset 622, mouse 620, and keyboard 618. The user output interfaces 614 couple to audio/video display device 616. The user output interface 614 may also couple to headphone 622. The display device 616 may include a monitor, projector, speakers, and other components that are used to present the audio and video output to a user. The electronic device 602 embodies the structure and performs operations of the present invention with respect to audio/video stream formation and transport.

In one particular construct of the electronic device 602, dedicated hardware is employed for audio and/or video encoding and/or decoding operations. In such case, the electronic device 602 includes decoding circuitry 634 and encoding circuitry 636. Alternatively, the electronic device 602 may include non-dedicated video processing, protocol stack, decoding, and/or decoding resources. In such case, these operations of electronic device 602 are serviced by processing circuitry 604. The processing circuitry 604 performs, in addition to its PC operations, protocol stack operations 638 and may encoding/decoding operations 640. In such case, particular hardware may be included in the processing circuitry 604 to perform the operations 638 and 640. Alternatively, video processing operations, protocol stack operations 638, and encoding/decoding operations 640 may be accomplished by the execution of software instructions. In this case, the processing circuitry 604 retrieves video processing instructions 624, protocol stack instructions 626, decoding instructions 628, and/or encoding instructions 630 from memory 608. The processing circuitry 604 executes these various instructions 624, 626, 628, and/or 630 to perform the indicated functions. Processing circuitry 604 may include one or more processing devices such as microprocessors, digital signal processors, application specific processors, or other processing type devices. Memory 606 may be any type of digital memory, volatile, or non-volatile, capable of storing digital information such as RAM, ROM, hard disk drive, Flash RAM, Flash ROM, optical drive, or other type of digital memory.

The audio/video processing device 602 includes the first network interface 608 and the second network interface 610. Generally, the electronic device 602 receives video and audio streams (within data packets) via one of the first and second network interfaces 608 and 610. In its other operations, the electronic device 602 may output video and audio streams (within data packets) from one of network interfaces 608 or 610.

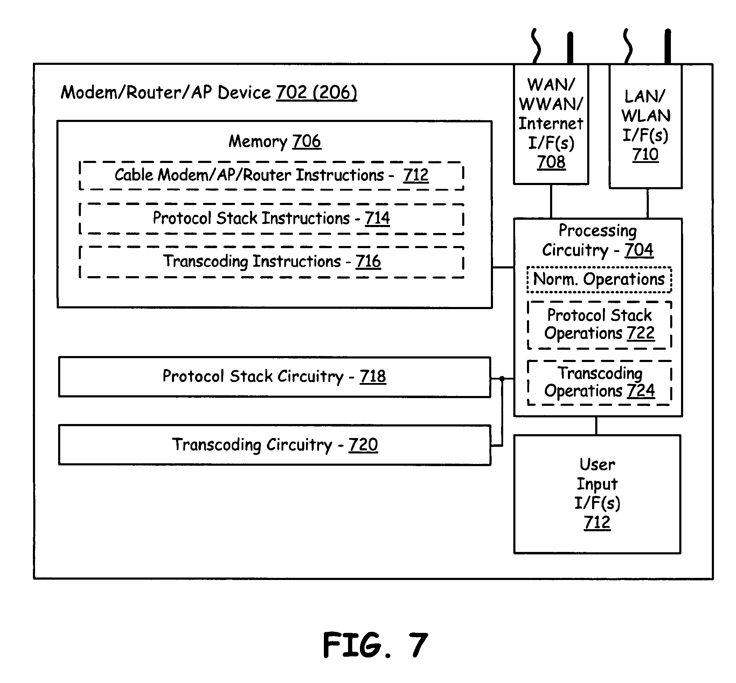

FIG. 7 is a block diagram illustrating another electronic device constructed and/or operating according to one or more embodiments of the present invention. A modem/router/access point device 702 is illustrated as the electronic device of FIG. 7. The electronic device 702 may correspond to the intermediate device 206 of FIG. 2. As contrasted to the electronic device 602 of FIG. 6, the electronic device 702 of FIG. 7 receives the base video stream and the at least one other video layer stream, transcodes the video layer streams, and produces as output a composite video stream. To accomplish these operations, the device electronic 702 includes processing circuitry 704, memory 706, first and second network interfaces 708 and 710, user input interface 712, and may include specialized circuitry. The specialized circuitry may include protocol stack circuitry 718 and transcoding circuitry 720.

Protocol stack operations may be implemented as dedicated hardware such as protocol stack circuitry 718 or may be software implemented, or may be a combination of both. In such case, the processing circuitry 704, in addition to its normal operations, performs protocol stack operations 722 and transcoding operations 724. In such case, the processing circuitry 704 may access cable modem/AP/router instructions 712, protocol stack instructions 714, and transcoding instructions 716 from memory and process such instructions. Transcoding by device 702 may also include altering the resolution of the transport packet, altering the frame rate of the transport stream, and/or making additional alterations of the video content of the transport stream.

FIG. 8 is a flow chart illustrating operations according to one or more embodiments of the present invention for transmitting video layer streams over multiple communication links. Operation 800 commences with the source device establishing a reception verified communication link with the destination device (Step 802). Operation continues with the source device establishing a non-reception verified communication link with the destination device (Step 804). Then, operation includes the source device encoding video data into a plurality of video layer streams including a base video layer stream and at least one other video layer stream (Step 806). The source device then transmits the base video layer stream to the destination device via the reception verified communication link (Step 808). Further, the source device transmits the at least one other video layer stream to the destination device via non-reception verified communication link (Step 810). Operation may also include the source the device transmitting a audio stream to the destination device via a communication link (Step 812). The communication link used to carry the audio stream may be either the reception verified communication link or the non-reception verified communication link.

FIG. 9 is a flow chart illustrating operations according to one or more embodiments of the present invention for receiving video layer streams over multiple communication links. Operation 900 commences with the destination device establishing a reception verified communication link with the source device (Step 902). Operation continues with the destination device establishing a non-reception verified communication link with the source device (Step 904). Operation continues with the destination device receiving a base video layer stream via the reception verified communication link (Step 908). Further, the destination device receives the other video layer streams via the non-reception verified communication link (Step 910). The destination device then decodes the base layer stream and the at least one other video layer stream to produce output video data (Step 912). The destination device may then store the output video data or present the output video data to a user via user interface that includes a display. Further, the destination device may receive an audio stream via one or more of the communication links and decode the audio stream to produce output audio data (Step 914). The output audio data may then be presented to the user via the user interface along with the output video data. The decoding of the encoded video layer streams and the encoded audio streams may be done by a single decoding device/decoding operation in the destination device. Such operation may be separately performed as well with synchronization of the output video data and the output audio data performed so that the video and audio data is correctly presented to a user.

The terms "circuit" and "circuitry" as used herein may refer to an independent circuit or to a portion of a multifunctional circuit that performs multiple underlying functions. For example, depending on the embodiment, processing circuitry may be implemented as a single chip processor or as a plurality of processing chips. Likewise, a first circuit and a second circuit may be combined in one embodiment into a single circuit or, in another embodiment, operate independently perhaps in separate chips. The term "chip", as used herein, refers to an integrated circuit. Circuits and circuitry may comprise general or specific purpose hardware, or may comprise such hardware and associated software such as firmware or object code.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A method for operating a source device to transport video data to a destination device, the method comprising:
establishing a reception verified communication link with the destination device;
establishing a non-reception verified communication link with the destination device;
coding the video data into a plurality of video layer streams including a base video layer stream and at least one other video layer stream;
transmitting the base video layer stream to the destination device via the reception verified communication link; and
transmitting the at least one other video layer stream to the destination device via the non-reception verified communication link.

2. The method of claim 1, wherein the reception verified communication link comprises at least one of the Transmission Control Protocol (TCP), the Stream Transmission Control Protocol (STCP), and the Streamed Video File Transfer Protocol (SVFTP).

3. The method of claim 1, wherein the non-reception verified communication link comprises the User Datagram Protocol.

4. The method of claim 1, wherein the reception verified communication link and the non-reception verified communication link differ at the transport layer of corresponding protocol stacks.

5. The method of claim 1, wherein:
the base video layer stream is an independent video stream; and
the at least one other video layer stream is dependent upon the independent video stream.

6. The method of claim 1, further comprising:
encoding audio data into an encoded audio stream; and
transmitting the encoded audio stream to the destination device using the non-reception verified communication link.

7. A method for operating a destination device to receive video data from a source device, the method comprising:
establishing a reception verified communication link with the source device;
establishing a non-reception verified communication link with the source device;
receiving a base video layer stream from the source device via the reception verified communication link;
receiving at least one other video layer stream from the source device via the non-reception verified communication link; and
decoding the base video layer stream and at least one other video layer stream to produce output video data.

8. An electronic device for transporting video data to a destination device comprising:
a communication interface; and
processing circuitry coupled to the communication interface, the processing circuitry operable to:
establish a reception verified communication link with the destination device via the communication interface;
establish a non-reception verified communication link with the destination device via the communication interface;
code the video data into a plurality of video layer streams including a base video layer stream and at least one other video layer stream;
transmit the base video layer stream to the destination device via the reception verified communication link; and
transmit the at least one other video layer stream to the destination device via the non-reception verified communication link.

9. The electronic device of claim 8, wherein the reception verified communication link comprises at least one of the Transmission Control Protocol (TCP), the Stream Transmission Control Protocol (STCP), and the Streamed Video File Transfer Protocol (SVFTP).

10. An electronic device for receiving a plurality of video data streams from a source device comprising:
a communication interface; and
processing circuitry coupled to the communication interface, the processing circuitry operable to:
establish a reception verified communication link with the source device via the communication interface;
establish a non-reception verified communication link with the source device via the communication interface;
receive a base video layer stream from the source device via the reception verified communication link;
receive at least one other video layer stream from the source device via the non-reception verified communication link; and
decode the base video layer stream and at least one other video layer stream to produce output video data.
